# EUROPEAN PATENT SPECIFICATION

(11) **EP 0 662 579 B1**
(45) Date of publication and mention of the grant of the patent: **18.03.1998**
(21) Application number: 95300027.0
(22) Date of filing: 04.01.1995
(51) Int. Cl.: F16L 9/147, F16L 11/08, F16L 11/12, F16L 59/14

(54) **Pre-fabricated insulation tube**
Mit einer Isolation vorgefertigtes Rohr
Tuyau préfabriqué avec isolation thermique

(30) Priority: 06.01.1994 US 225180
(43) Date of publication of application: 12.07.1995
(73) Proprietor: AIR PRODUCTS AND CHEMICALS, INC., Allentown, PA 18195-1501 (US)
(72) Inventor: Nguyen, David Duong, Bethlehem, Pennsylvania 18017 (US)
(74) Representative: Burford, Anthony Frederick

(56) References cited:
- EP-A- 0 225 780
- BE-A- 348 089
- GB-A- 885 594
- GB-A- 2 034 433
- LU-A- 55 579
- US-A- 4 005 234
- US-A- 4 044 184

## Description

The present invention pertains to insulating piping, especially piping used in vacuum jacketed vessels for cryogenic liquid transfer/storage containers.

Transportation, storage and/or distribution of industrial gases such as oxygen, nitrogen, helium, hydrogen, argon, and neon with atmospheric pressure condensation temperatures in the cryogenic range, e.g., below -130°F (-90°C) becomes most economical when the gases are maintained in the liquid phase. One such device for storing industrial gases is shown and described in US-A-4,988,014. In manufacturing a cryogenic vessel such as shown in US-A-4,988,014, the internal portion of the vessel contains a great deal of piping and tubing so that the contained cryogen can be introduced into the inner vessel, withdrawn from the inner vessel, and any evaporating gases inside of the inner vessel can be vented safely from the storage receptacle. In order to maintain the integrity of the inner storage vessel, it is usually encased in an outer vacuum jacket, and the inner vessel as well as the piping is covered with what is known in the art as super-insulation. In the manufacture of conventional vessels such as shown in the aforementioned patent, the tubing inside of the vessel is wrapped with the insulation which can comprise alternate layers of a polyethylene terephthalate polyester film such as that sold under the tradename Mylar and aluminum foil as is well known in the art. Alternatively, prefabricated blankets of insulation can be wrapped around the pipe. All of these techniques are hand oriented adding to the time it takes to fabricate a vessel and of necessity increasing the cost for fabrication of such a vessel. Currently, narrow rolls of Mylar™ and aluminum foil are used in the hand insulation process which has somewhat improved the dexterity of the personnel who insulate the piping, but has not significantly reduced fabrication time and/or fabrication cost.

In order to avoid the problems and to facilitate insulating piping and tubing for cryogenic service, it has been discovered that a preformed tube or pipe insulating structure can be achieved by fabricating and then placing a loose coil spring having a diameter equal to or slightly larger than the outside diameter of the pipe or tubing to be insulated over a mandrel. Thereafter, alternate layers of a multilayer insulation, alternate layers of a single insulation, or layers of thicker insulation are wrapped around the coil spring, and, if required, an outer layer of fiber glass yarn can be wrapped over the insulating layers. The entire subassembly can then be removed from the mandrel, cut into needed lengths and, depending upon the initial winding of the coil to a specified diameter, installed on the outside diameter of a pipe or tube of complementary diametrical size. Because a loose coil spring arrangement is used, the insulation can be installed on piping or tubing having bends or curves.

According to a first aspect, the present invention provdes a prefabricated insulation for a conduit for cryogenic liquid comprising a substrate, said substrate comprising a loose wound coil spring having spaces between successive turns of the spring, and wrapped around said substrate a plurality of layers of insulating material.

Preferably, the coil spring has a space of at least 1 cm (⅜ inch) between successive turns of the coil spring and it also is preferred that it has an inner diameter of 1 cm (⅜ inch) to 12 cm (4½ inches). The wire suitably has a nominal diameter of between 0.5 mm (0.020 inch) and 0.75 mm (0.030 inch) and preferably is fabricated from aluminum or stainless steel.

In a preferred embodiment, the insulating material is a multilayer superinsulation, which may contain alternate layers of polyethylene terephthalate polyester film, insulating paper and aluminum foil. The first layer of the multilayer superinsulation installed on the substrate usually is polyethylene terephthalate polyester film.

A cover of, for example fiberglass yarn, may be installed over layers of the insulating material.

The invention also provides a method of making the prefabricated insulation comprising the steps of forming a loose coil-spring shaped substrate from a continuous length of wire over a mandrel, said substrate being of an inside diameter determined by the outside diameter of a tube or pipe for which the preformed insulation will be used; and wrapping said substrate with a plurality of layers of insulating material.

In another aspect, the invention provides the use of the prefabricated insulation to insulate a conduit for conveying fluid at a temperature below -90°C (-130°F), for example in a vacuum jacketed vessel for a cryogenic liquid transfer or storage container.

In a further aspect, the invention provides a conduit for cryogenic liquid insulated with a prefabricated insulation comprising a substrate, said substrate comprising a loose wound coil spring mounted about the conduit and having an inner diameter at least equal to the outer diameter of the conduit and having spaces between successive turns of the spring, and a plurality of layers of insulating material wrapped around said substrate.

The invention also provides a vacuum jacketed vessel for a cryogenic liquid transfer or storage container wherein at least one said conduit.

The following is a description by example only and with reference to the accompanying drawing of a presently preferred embodiment of the invention. In the drawings:-
Figure 1 is an isometric drawing showing a method and apparatus of the present invention as applied to a length of tubing, and
Figure 2 is a schematic representation of a substrate or coil-spring according to the present invention.

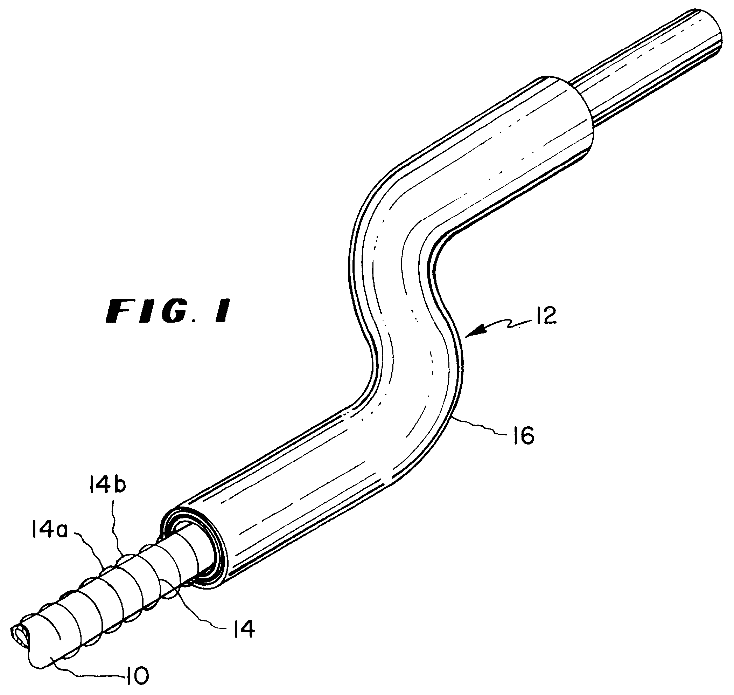

Referring to Figure 1, there is shown a pipe or tube 10 which can be installed in a cryogenic device such as the dewar shown in US-A-4,988,014. Such piping can be bent as shown in Figure 1 to accommodate passage around obstacles and can be the subject of S bends or any bend that will provide free flow of the liquid inside the tube or pipe 10. In accord with the invention, 90° bends where elbow or other type plumbing fittings are used can also be accommodated.

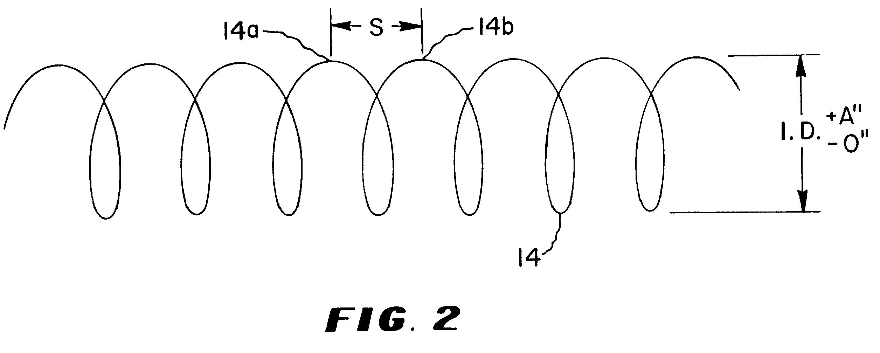

The pipe 10 is shown for convenience and understanding of the invention. In constructing the insulating composite 12, a mandrel (not shown) which corresponds to the outside diameter of the pipe or tube 10 to which the preformed insulation is to be applied is used to hold a coil spring-like device 14 which is loosely wrapped about the mandrel and has a defined distance between the successive turns 14a, 14b (Figure 2), as will hereinafter be more fully explained. Once the wire substrate 14 is placed on the mandrel, insulation composite 16 can then be conveniently and automatically wound over the wire substrate 14. Such insulation can include alternate layers of Mylar™, insulating paper and aluminum foil, which is known in the trade as multilayer insulation (MLI) or super insulation. Other types of insulation can be wound over the substrate 14 in accord with service for which the assembly is to be used. Thicker insulation, e.g., blankets, can be wound over the substrate 14. Any type of covering can be wrapped over the insulation, such as fiberglass yarn which is also well known material used in the fabrication of cryogenic vessels.

The preferred materials for the wire substrate are aluminum or stainless steel wire having a nominal wire diameter of 0.020 inch (0.5 mm) to 0.030 inch (0.75 mm). As shown in Figure 2, the wire coil or substrate 14 has a defined distance between the successive turns (wraps or coils) 14a, 14b of the wire in the free condition. The wire is also wound to a specified inside diameter with a plus but not minus tolerance as shown in Table 1 below. Usually, the inner diameter of the wire substrate will be ⅜ inch (1 cm) to 4½ inches (12 cm) and the opening between coils will be at least ⅜ inch (1 cm).

**TABLE 1**

| COIL AT FREE CONDITION | | | | | | | |
|---|---|---|---|---|---|---|---|
| I.D. | | S | | A | | D (WIRE DIA) | |
| inch | (cm) | inch | (cm) | inch | (cm) | inch | (cm) |
| 3/8 | (0.95) | 3/8 | (0.95) | 1/16 | (0.15) | 0.020 | (0.05) |
| 1/2 | (1.25) | 1/2 | (1.25) | 1/16 | (0.15) | 0.020 | (0.05) |
| 5/8 | (1.6) | 1/2 | (1.25) | 1/16 | (0.15) | 0.020 | (0.05) |
| 3/4 | (1.9) | 1/2 | (1.25) | 1/16 | (0.15) | 0.020 | (0.05) |
| 1¼ | (3.2) | 5/8 | (1.6) | 3/32 | (0.25) | 0.025 | (0.065) |
| 1.315 | (3.35) | 5/8 | (1.6) | 3/32 | (0.25) | 0.025 | (0.065) |
| 1.9 | (4.85) | 5/8 | (1.6) | 3/32 | (0.25) | 0.025 | (0.065) |
| 2 | (5.1) | 5/8 | (1.6) | 3/32 | (0.25) | 0.025 | (0.065) |
| 2⅞ | (7.3) | 3/4 | (1.9) | 1/8 | (0.3) | 0.030 | (0.075) |
| 3 | (7.6) | 3/4 | (1.9) | 1/8 | (0.3) | 0.030 | (0.075) |
| 3½ | (8.9) | 3/4 | (1.9) | 1/8 | (0.3) | 0.030 | (0.075) |
| 4½ | (11.45) | 3/4 | (1.9) | 1/8 | (0.3) | 0.030 | (0.075) |

From Table 1 it can be seen that according to the present invention, tube or pipe diameters from ⅜ inch (0.95 cm) to 4½ inches (11.45 cm) can be insulated using the method and apparatus of the present invention. In order to accommodate the various sizes, the spacing between the coils 14a, 14b changes as does the tolerance on the plus side of the inside diameter of the coil in the free or loose condition.

In accord with the present invention the wire 14 can be installed over a mandrel rotated between centers and the insulation applied to the wire 14 by mechanical means. When the insulation is wrapped to the desired thickness and a cover installed if desired, the entire assembly can be removed from the mandrel and stored for future use. As the piping or tubing is installed inside of the cryogenic vessel the desired insulation can be taken from storage and instated over the pipe or tube by a sliding motion to facilitate rapid and more cost-effective fabrication of cryogenic vessels. Because of the loose condition of the spring the insulation encounters no difficulty in going around bends in the pipe or tubing or even around welded joints of varying angular disposition.

In accord with the present invention the preformed insulation results in labor savings of greater than 90% over current practices of hand wrapping piping and tubing after assembly or partial assembly inside a cryogenic vessel. In accord with the present invention insulation tubes can be wrapped ahead of their need or as the piping is fabricated. The prefabricated insulation tubes slide easily over welds and curves of the pipe assemblies and allows proper insulation of hard to reach areas thus improving the quality of and the performance of the insulation.

In one embodiment of the present invention, using Mylar™ as the first layer is particularly effective. Also, in accord with the present invention, the spring must be in its totally free condition prior to beginning of wrapping of the insulation.

## Claims

1. A prefabricated insulation (12) for a conduit (10) for cryogenic liquid, comprising a substrate, said substrate comprising a loose wound coil spring (14) having spaces between successive turns (14a,14b) of the spring, and wrapped around said substrate a plurality of layers (16) of insulating material.

2. A prefabricated insulation according to Claim 1, wherein said coil spring (14) has a space of at least 1 cm (⅜ inch) between successive turns (14a,14b) of the coil spring.

3. A prefabricated insulation according to Claim 2, wherein said loose coil spring (14) has an inner diameter of 1 cm (⅜ inch) to 12 cm (4½ inches).

4. A prefabricated insulation according to any one of the preceding claims, wherein said coil spring (14) is fabricated from aluminum or stainless steel wire.

5. A prefabricated insulation according to any one of the preceding claims, wherein the wire has a nominal diameter of between 0.5 mm (0.020 inch) and 0.75 mm (0.030 inch).

6. A prefabricated insulation according to any one of the preceding claims, wherein the insulating material (16) is a multilayer superinsulation.

7. A prefabricated insulation according to Claim 6, wherein the multilayer superinsulation (16) contains alternate layers of polyethylene terephthalate polyester film, insulating paper and aluminum foil.

8. A prefabricated insulation according to Claim 7, wherein the first layer of the multilayer superinsulation (16) installed on the substrate is polyethylene terephthalate polyester film.

9. A prefabricated insulation according to any one of the preceding claims, wherein a cover is installed over layers of insulating material (16).

10. A prefabricated insulation according to Claim 9, wherein the cover is made from fiberglass yarn.

11. A method of making prefabricated insulation as defined in Claim 1 comprising the steps of:
forming a loose coil-spring shaped substrate (14) from a continuous length of wire over a mandrel, said substrate being of an inside diameter determined by the outside diameter of a tube or pipe (10) for which the preformed insulation will be used; and
wrapping said substrate with a plurality of layers of insulating material (16).

12. A method according to Claim 11, wherein said substrate and/or insulating material is as defined in any one of Claims 2 to 10.

13. The use of a prefabricated insulation according to any one of Claims 1 to 10 to insulate a conduit for conveying fluid at a temperature below -90°C (-130°F).

14. A use according to Claim 13, wherein the conduit is in a vacuum jacketed vessel for a cryogenic liquid transfer or storage container.

15. A conduit (10) for cryogenic liquid insulated with a prefabricated insulation comprising a substrate, said substrate comprising a loose wound coil spring (14) mounted about the conduit (10) and having an inner diameter at least equal to the outer diameter of the conduit (10) and having spaces between successive turns (14a, 14b) of the spring, and a plurality of layers of insulating material (16) wrapped around said substrate.

16. A conduit according to Claim 15, wherein said prefrabricated insulation is as defined in any one of Claims 2 to 10.

17. A vacuum jacketed vessel for a cryogenic liquid transfer or storage container wherein at least one conduit therein is as defined in Claim 15 or Claim 16.

## Patentansprüche

1. Vorgefertigte Isolation (12) für eine Leitung (10) für kryogene Flüssigkeit mit einem Substrat, wobei das Substrat eine lose gewickelte Wendel- bzw. Schraubenfeder (14) mit Abständen zwischen aufeinanderfolgenden Windungen (14a, 14b) der Feder aufweist, und mit mehreren um das Substrat herumgewickelten Schichten (16) eines isolierenden Materials.

2. Vorgefertigte Isolation nach Anspruch 1, bei der die Schraubenfeder (14) einen Abstand von mindestens 1 cm (3/8 Inch) zwischen aufeinanderfolgenden Windungen (14a, 14b) der Schraubenfeder aufweist.

3. Vorgefertigte Isolation nach Anspruch 2, bei der die lose Schraubenfeder (14) einen Innendurchmesser von 1 cm (3/8 Inch) bis 12 cm (4 1/2 Inch) aufweist.

4. Vorgefertigte Isolation nach einem der vorhergehenden Ansprüche, bei der die Schraubenfeder aus Aluminium- oder Edelstahldraht hergestellt ist.

5. Vorgefertigte Isolation nach einem der vorhergehenden Ansprüche, bei der der Draht einen nominalen Durchmesser von zwischen 0,5 mm (0,02 Inch) und 0,75 mm (0,030 Inch) hat.

6. Vorgefertigte Isolation nach einem der vorhergehenden Ansprüche, bei der das Isolationsmaterial (16) eine Mehrschicht-Superisolation ist.

7. Vorgefertigte Isolation nach Anspruch 6, bei der die Mehrschicht-Superisolation (16) einander abwechselnde Schichten aus Polyethylen-Terephthalat-Polyesterfilm, isolierendem Papier und Aluminiumfolie aufweist.

8. Vorgefertigte Isolation nach Anspruch 7, bei der die erste Schicht der Mehrschicht-Superisolation (16), die auf das Substrat aufgebracht ist, ein Polyethylen-Terephthalat-Polyesterfilm ist.

9. Vorgefertigte Isolation nach einem der vorhergehenden Ansprüche, bei der eine Abdeckung über den Schichten des isolierenden Materials (16) angebracht ist.

10. Vorgefertigte Isolation nach Anspruch 9, bei der die Abdeckung aus einem Fiberglas-Garn hergestellt ist.

11. Verfahren zur Herstellung einer vorgefertigten Isolation, wie sie im Anspruch 1 definiert ist, mit den folgenden Schritten:
- Ausbildung eines Substrates mit einer losen Wendel- bzw. Schraubenfeder (14) aus einer fortlaufenden Drahtlänge über einem Dorn, wobei das Substrat einen Innendurchmesser hat, der durch den Außendurchmesser eines Rohrs oder einer Leitung (10) bestimmt wird, für welche die vorgeformte Isolation verwendet wird; und
- Umwickeln des Substrats mit mehreren Schichten aus isolierendem Material (16).

12. Verfahren nach Anspruch 11, bei dem das Substrat und/oder das isolierende Material eines ist, wie es in einem der Ansprüche 2 bis 10 definiert ist.

13. Verwendung einer vorgefertigten Isolation gemäß einem der Ansprüche 1 bis 10 zur Isolation einer Leitung für das Fördern von Fluid bei einer Temperatur unterhalb von -90° C (-130° Fahrenheit).

14. Verwendung nach Anspruch 13, bei der die Leitung sich in einem Behälter mit einem Unterdruckmantel für die Übertragung kryogener Flüssigkeit oder in einem Speicherbehälter befindet.

15. Leitung (10) für kryogene Flüssigkeit, die mit einer vorgefertigten Isolation, mit einem Substrat isoliert ist, wobei das Substrat eine lose gewickelte Wendel- bzw. Schraubenfeder (14) umfaßt, die um die Leitung (10) herum angebracht ist und einen Innendurchmesser aufweist, der mindestens gleich dem Außendurchmesser der Leitung (10) ist und Abstände zwischen aufeinderfolgenden Windungen (14a, 14b) der Feder aufweist, und mit mehreren Schichten aus isolierendem Material (16), die um das Substrat herum gewickelt sind.

16. Leitung nach Anspruch 15, bei der die vorgefertigte Isolation eine ist, wie sie in einem der Ansprüche 2 bis 10 definiert ist.

17. Behälter mit einem Unterdruckmantel für den Transport kryogener Flüssigkeit oder als Aufbewarungsbehälter, bei dem mindestens eine Leitung darin so ausgebildet ist, wie sie in den Ansprüchen 15 oder 16 definiert ist.

## Revendications

1. Isolation thermique préfabriquée (12) destinée à un conduit (10) pour un liquide cryogénique, comprenant un substrat, ledit substrat comprenant un ressort hélicoïdal enroulé sans tension (14) comportant des espacements entre les spires successives (14a,14b) du ressort, et une pluralité de couches (16) de matériau isolant qui enveloppent ledit substrat.

2. Isolation thermique préfabriquée selon la revendication 1, dans laquelle ledit ressort hélicoïdal (14) comporte un espacement d'au moins 1 cm (3/8 de pouce) entre les spires successives (14a,14b) du ressort hélicoïdal.

3. Isolation thermique préfabriquée selon la revendication 2, dans laquelle ledit ressort hélicoïdal sans tension (14) a un diamètre intérieur allant de 1 cm (3/8 de pouce) à 12cm (4 ½ pouces).

4. Isolation thermique préfabriquée selon l'une quelconque des revendications précédentes, dans laquelle ledit ressort hélicoïdal (14) est fabriqué en fil d'aluminium ou d'acier inoxydable.

5. Isolation thermique préfabriquée selon l'une quelconque des revendications précédentes, dans laquelle le fil a un diamètre nominal entre 0,5 mm (0.020 pouce) et 0,75 mm (0.030 pouces).

6. Isolation thermique préfabriquée selon l'une quelconque des revendications précédentes, dans laquelle le matériau isolant (16) est une super isolation thermique multicouches.

7. Isolation thermique préfabriquée selon la revendication 6, dans laquelle la super isolation thermique multicouches (16) contient des couches alternées de film de polyester de terephthalate de polyéthylène, de papier isolant et de feuille d'aluminium.

8. Isolation thermique préfabriquée selon la revendication 7, dans laquelle la première couche de la super isolation thermique multicouches (16) installée sur le substrat est un film de polyester de terephtalate de polyéthylène.

9. Isolation thermique préfabriquée selon l'une quelconque des revendications précédentes, dans laquelle une couche de recouvrement est installée sur les couches de matériau isolant (16).

10. isolation thermique préfabriquée selon la revendication 9, dans laquelle la couche de recouvrement est réalisée en fil de fibre de verre.

11. Procédé de fabrication d'une isolation thermique préfabriquée telle que définie dans la revendication 1, comprenant les étapes :
de formation d'un substrat en forme de ressort hélicoïdal sans tension (14) à partir d'un élément continu de fil sur un mandrin, ledit substrat ayant un diamètre intérieur déterminé par le diamètre extérieur du tube ou du tuyau (10) pour lequel on va utiliser l'isolation thermique préformée ; et
d'enveloppement dudit substrat par une pluralité de couches de matériau isolant (16).

12. Procédé selon la revendication 11, dans lequel ledit substrat et/ou le matériau isolant est tel que défini dans l'une quelconque des revendications 2 à 10.

13. Utilisation d'une isolation thermique préfabriquée selon l'une quelconque des revendications 1 à 10 pour isoler thermiquement un conduit destiné à transporter du fluide à une température inférieure à -90°C (-130°F).

14. Utilisation selon la revendication 13, dans laquelle le conduit se trouve dans un récipient sous vide à chemise destiné à un conteneur de transport ou de stockage de liquide cryogénique.

15. Conduit (10) destiné à du liquide cryogénique isolé thermiquement au moyen d'une isolation thermique préfabriquée comprenant un substrat, ledit substrat comprenant un ressort hélicoïdal enroulé sans tension (14) monté autour du conduit (10) et ayant un diamètre intérieur au moins égal au diamètre extérieur du conduit (10) et comportant des espacements entre les spires successives (14a,14b) du ressort, et une pluralité de couches de matériau isolant (16) qui enveloppent ledit substrat.

16. Conduit selon la revendication 15, dans lequel ladite isolation thermique préfabriquée est telle que définie dans l'une quelconque des revendications 2 à 10.

17. Récipient sous vide à chemise destiné à un conteneur de transport ou de stockage de liquide cryogénique dans lequel au moins un conduit qui s'y trouve est tel que défini dans la revendication 15 ou dans la revendication 16.
